# EUROPEAN PATENT SPECIFICATION

(11) **EP 2 888 904 B1**
(45) Date of publication and mention of the grant of the patent: **24.01.2018**
(21) Application number: 12761692.8
(22) Date of filing: 27.08.2012
(51) Int. Cl.: H04W 28/06

(54) **METHOD AND USER EQUIPMENT FOR ASSEMBLING UPLINK DATA**
VERFAHREN UND BENUTZERGERÄT ZUR ZUSAMMENSTELLUNG VON UPLINK-DATEN
PROCÉDÉ ET ÉQUIPEMENT D'UTILISATEUR POUR ASSEMBLER DES DONNÉES DE LIAISON MONTANTE

(43) Date of publication of application: 01.07.2015
(73) Proprietor: Telefonaktiebolaget LM Ericsson (publ), 164 83 Stockholm (SE)
(72) Inventor: ERIKSSON, Erik, SE-585 93 Linköping (SE); RUNE, Johan, SE-181 29 Lidingö (SE)
(74) Representative: Ericsson
(86) International application number: PCT/SE2012/050906
(87) International publication number: WO 2014/035301

(56) References cited:
- EP-A1- 1 986 455
- US-A1- 2010 165 936
- US-A1- 2010 284 356
- US-A1- 2011 164 574
- US-A1- 2011 164 664
- US-A1- 2011 256 884

## Description

### TECHNICAL FIELD

The disclosure generally relates to resource allocation in a wireless communication system, and particular to a user equipment, a network node and methods therein for dynamic resource allocation in a wireless communication system.

### BACKGROUND

In future development of the communication in cellular networks huge numbers of small autonomous devices become increasingly important. These devices are assumed not to be associated with humans, but are rather sensors or actuators of different kinds, which communicate with application servers, which configure the devices and receive data from them, within or outside the cellular network. Hence, this type of communication is often referred to as machine-to-machine (M2M) communication and the devices may be denoted machine devices (MDs). In the 3^{rd} Generation Partnership Project (3GPP) standardization the corresponding alternative terms are machine type communication (MTC) and MTC devices, with the latter being a subset of the more general term user equipment (UE). In terms of numbers MTC devices may dominate over human users, but since many of them will communicate very scarcely, their part of the traffic volume may be much smaller than their part of the user population.

With the nature of MTC devices and their assumed typical uses follow that they will often have to be very energy efficient, since external power supplies will often not be available and since it is neither practically nor economically feasible to frequently replace or recharge their batteries. Hence, to make a wireless communications network, such as a Long Term Evolution (LTE) network, a viable alternative for communication with such devices it is crucial to enable the MTC devices to operate extremely energy-efficiently. In addition, ubiquitous deployment of such devices relies on availability of simple, low-cost devices. Therefore, enabling simple devices to connect to the LTE network, possibly with reduced functionality and lowered requirements, may be a key for realization of visionary M2M scenarios.

Machine devices, however, consist of a very heterogeneous flora of devices and applications. Although the above described energy deprived devices, e.g. sensor devices, may constitute the largest part in terms of numbers, many other types of MTC devices and MTC applications are also envisioned or already existing. One such type is the development of power grids into what is denoted as "smart grids". This refers to the evolution of the conservative power grid technology into grids that are better adapted to the envisioned future requirements in the area of generation and distribution of electricity, involving intermittent generation sources, such as wind and solar power plants, many small generation sources, such as customers which sometimes produce more electricity than they consume, and a desire to impact the customers' energy consumption habits to even out load peaks. In this evolution information technology, in particular communication technology has an important role to play. In many smart grid applications entities in the power grid, so-called substations, e.g. transformer stations, communicate with each other and with a control center for the purpose of automation and protection of equipment when faults occur. In contrast to the above described energy deprived devices with delay tolerant scarce communication, these smart grid applications often have extremely strict latency requirements, the amount of data communicated may range between small and large and the energy supply is typically a non-issue. To make cellular communication technology a possible and attractive means of communication for such devices and applications, it is crucial to keep the delay associated with access and end-to-end communication as low as possible.
A brief description of how scheduling/allocation of uplink transmission resources is performed in LTE follows below.

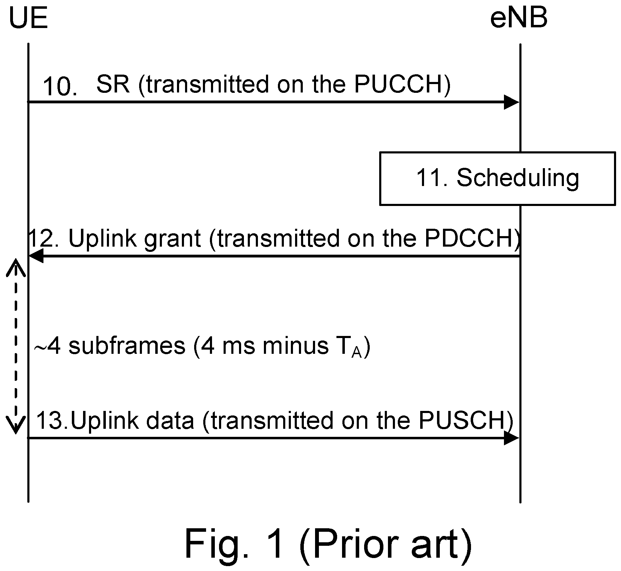

The procedure leading to an uplink transmission of data on the Physical Uplink Shared Channel (PUSCH) consists of a request for uplink transmission resources from the UE to the network node, an allocation of uplink resources triggered by the request, signaling of uplink grant from the network node to the UE, and finally an uplink transmission of data from the UE. This procedure is illustrated in **Figure 1****.** The resource request signaled 10 from the UE consists of a scheduling request (SR) transmitted on a Physical Uplink Control Channel (PUCCH) resource dedicated for the UE. The SR in itself contains no structure and no specific information other than that uplink transmission resources are requested. The PUCCH resources that are used for the SR transmission implicitly indicate which UE that is requesting the transmission resources since these PUCCH resources are dedicated for this specific UE. The scheduling algorithm 11 in the network node, i.e. the base station called eNodeB (eNB) in LTE, then selects suitable uplink transmission resources on the PUSCH to allocate to the UE and signals 12 the allocation to the UE using an uplink grant on the Physical Downlink Control Channel (PDCCH). The uplink grant also indicates the modulation and coding scheme (MCS) to use for the data transmission. The data to be transmitted using the allocated resources is referred to as a transport block (TB). The size of the TB is not explicitly included in the uplink grant, but is implicitly derived from the size of the allocated resources combined with the indicated MCS. The uplink grant is addressed to the concerned UE by adding the dedicated Cell Radio Network Temporary Identifier (C-RNTI) of the UE to the Cyclic Redundancy Check (CRC) of the Downlink Control Information (DCI) containing the uplink grant, i.e. the C-RNTI is not explicitly included in the DCI. The resource allocation granted by the eNB and indicated in the uplink grant always concerns resource blocks four subframes later than the uplink grant. This translates in LTE into approximately 4 ms, or, to be precise, 4 ms minus the timing advance, T_{A}, which is equal to, and compensates for, the propagation delay from the eNB to the UE and back. Finally, the UE transmits 13 buffered uplink data, i.e. uplink data waiting for transmission, using the allocated uplink resources on the PUSCH. Hence, the uplink transmission takes place after the transmission delay of approximately 4 ms from the point of reception of the uplink grant.

It should be mentioned that a scheduling request on the PUCCH is not the only way to request uplink transmission resources. Uplink transmission resources may also be requested using signaling on the PUSCH when transmitted in conjunction with user data or higher layer signaling data.

In addition to the above described regular one-time allocation of transmission resources there is a special form of allocation of repetitive transmission resources denoted semi-persistent scheduling (SPS). SPS is configured in advance for a UE through RRC signaling and is activated through a one-time uplink grant signaled on the PDCCH. Uplink transmission resources may also be allocated using the Random Access Response message during the random access procedure. However, these methods do not enable dynamic resource allocation.

Yet another way of requesting uplink transmission resources is an implicit request in the form of a non-zero Buffer Status Report (BSR) transmitted from the UE in a Medium Access Control (MAC) Control Element in conjunction with data transmission on the PUSCH. This method can thus only be utilized by UEs that have already been allocated PUSCH transmission resources.

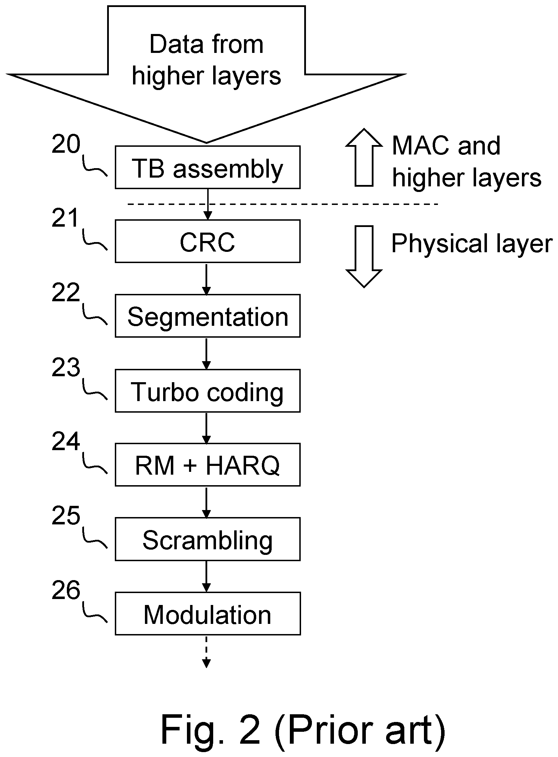

**Figure 2** illustrates the processing in the UE when preparing transmission of an uplink TB from the MAC layer through the physical layer. In a first step assembling 20 of a transport block is performed in the MAC layer. Then in a further step inserting 21 of CRC in the TB is performed. Further, in a next step 22 code-block segmentation and CRC insertion per code-block are performed in the UE. Turbo coding is executed in a further step 23 in the processing. Thereupon rate matching and Hybrid Automatic Repeat reQuest (HARQ) functionality of the physical layer are performed 24. The bit-level scrambling and the data modulation of the TB are performed in steps 25 and 26, respectively, before it is mapped to the assigned frequency resources.

The uplink transmission scheduling procedure described above is not suitable for MTC devices as it incurs a delay when accessing uplink transmission resources. This delay adds to the end-to-end delay that is crucial to keep as short as possible especially for mission critical smart grid applications. Additionally, the transmission delay between the reception of uplink grant and the start of transmission of the data is an undesirably tight time constraint for simple, low-complexity and low-energy MTC devices.

US 2010/165936 discloses a technique for pre-bundling received service data units (SDU) into an SDU bundle in a first communication layer before receiving a scheduling information from a second communication layer and adjusting the SDU bundle when the scheduling information is received.

US 2011/164574 discloses a message sent from a wireless network to a user equipment having a variable rate vocoder. The message defines transport block sizes for the user equipment to select from in making uplink transmissions if the user equipment is permitted to vary a packet size for uplink transmission. A scheduling grant is sent to the user equipment, and the scheduling grant includes an indicator indicating that the user equipment is permitted to vary the packet size for uplink transmissions by selecting a transport block size from among the defined transport block sizes.

### SUMMARY

It is therefore an object to address some of the problems outlined above, by providing a solution for enabling resource allocation in a wireless communication system. This object and others are achieved by the methods, the user equipment and the network node according to the independent claims, and by the embodiments according to the dependent claims.
In accordance with a first aspect of embodiments a method in a user equipment for enabling dynamic resource allocation in a wireless communication system is provided. The user equipment communicates with a network node comprised in the wireless communication system. The method comprises assembling uplink data, prior to receiving an uplink grant for transmission of the uplink data, into a transport block of a pre-configured transport block size to be transmitted to the network node.

In accordance with a second aspect of embodiments a user equipment for enabling dynamic resource allocation in a wireless communication system is provided. The user equipment is configured to communicate with a network node comprised in the wireless communication system. The user equipment comprises a processing unit configured to assemble uplink data, prior to receive an uplink grant for transmission of the uplink data, into a transport block of a pre-configured transport block size to be transmitted to the network node.

An advantage of embodiments is that the UE has more time for preparation of uplink data to be transmitted by enabling the processing of transmission data to start earlier in the UE.
Other objects, advantages and features of embodiments will be explained in the following detailed description when considered in conjunction with the accompanying drawings and claims.

### BRIEF DESCRIPTION OF THE DRAWINGS

**Figure 1** is a schematic illustration of the sequence involving request for and allocation of uplink transmission resources followed by uplink transmission using the allocated resources on the PUSCH according to prior art.
**Figure 2** is a schematic illustration of the processing in the UE when preparing transmission of an uplink transport block from the MAC layer through the physical layer according to prior art.
**Figure 3** is a schematic illustration of the sequence according to embodiments involving processing data using the pre-configured TB size, prior to receiving the uplink grant.
**Figure 4a-4b** are flowcharts of the method in the user equipment according to embodiments.
**Figure 5** is a flowchart of the method in the network node according to embodiments.
**Figure 6a-6b** are block diagrams illustrating the user equipment and the network node according to embodiments.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the embodiments are primarily described in the form of a method and device, they may also be embodied in a computer program product as well as in a system comprising a computer processor and a memory coupled to the processor, wherein the memory is encoded with one or more programs that may perform the functions disclosed herein.

The following embodiments are described in a non-limiting general context in relation to an example sequence for dynamic allocation of resources in a wireless communication system such as an LTE system as illustrated in **Figure 1****,** where the eNodeB (eNB) allocates resources for uplink transmission. However, it should be noted that the embodiments may be applied to any wireless communication system technology with dynamic resource allocation procedures similar to those in an LTE system, such as Universal Mobile Telecommunications System (UMTS), Wideband Code Division Multiple Access (WCDMA), High Speed Packet Access (HSPA) etc. The network node comprised in these wireless communication systems which allocate resources to the UE should be understood to correspond to the eNB in the embodiments described below.

Furthermore, the following embodiments primarily targets MTC devices. However, it should be noted that the solution of the embodiments may be used in conjunction with any type of UE.

The problem of the prior art allocation procedures is addressed by a solution providing a pre-configured transport block size in the UE. In embodiments the assembling of the transport block to be transmitted is started prior to the reception of the uplink grant and thereby the end-to-end delay and/or transmission delay is improved. The means to achieve this is to use a preconfigured transport block size proactively agreed upon by the UE and the eNB. The pre-configured transport block (TB) size has been pre-configured in either of the following ways: hardcoding, storing on a smartcard in the UE, i.e. in the Universal Subscriber Identity Module (USIM) on the Universal Integrated Circuit Card (UICC), through signaling of a dedicated RRC message, through signaling of a MAC message, through signaling of a broadcast message.

This approach allows the UE to start preparing the data to be transmitted, at least up to the stage when the data is delivered to the physical layer, i.e. assemble the TB, before receiving the uplink grant from the eNB. In one embodiment also the step of CRC is included in the preparation of the data. In a further embodiment the step of segmentation of the transport block is included in the preparation. The step of turbo coding is comprised in the preparation in yet another embodiment. Thus, the UE does not have to receive the uplink grant from the eNB in order to perform the step of TB assembly, CRC, segmentation and/or turbo coding. Hence, the processing of the data to be transmitted can be started earlier than in prior art solutions.

An advantage of embodiments is that the UE has more time for preparation of uplink data to be transmitted by enabling the processing of transmission data to start earlier in the UE. Another advantage of embodiments is that UEs may be made less complex and more energy efficient.

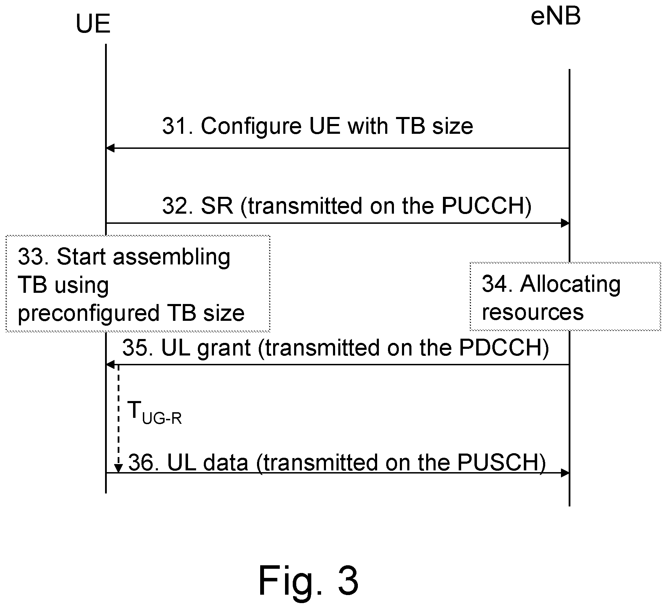

**Figure 3** is a schematic illustration of enabling dynamic resource allocation according to embodiments of the invention involving processing data in a UE using a pre-configured TB size prior to receiving an uplink grant from a network node such as an eNB. It may be assumed that the UE is pre-configured with a TB size. This is illustrated in a step 31 where the eNB pre-configures the UE with a transport block size to be used for uplink transmission. The pre-configuring of the UE may be performed in various ways mentioned above and which will be described in detail below. In a further step 32 when the UE has data to transmit it sends a scheduling request for resources for uplink transmission to the eNB. The UE then starts assembling 33 a transport block of the pre-configured transport block size prior to receiving an uplink grant from the eNB. The eNB allocates 34 resources to the UE based on the pre-configured TB size. Thereupon, the eNB sends 35 the uplink grant to the UE. When the UE has received the uplink grant and completed the processing of the TB it transmits 36 the TB to the eNB.

The processing time gained by the embodiments of the invention can be utilized to reduce the complexity and/or the energy consumption of the hardware associated with the processing comprised in the UE, e.g., simpler processor, simpler ASIC, reduced clock frequency, reduced voltage etc.

In embodiments the UE is also pre-configured with a transmission delay (henceforth denoted T_{UG-R}), i.e. the time between a point of receiving the uplink grant and a starting point of transmitting the transport block on the granted uplink resource, i.e. the time between the reception of the uplink grant and the uplink resources that the uplink grant allocates, which may be greater than 4 subframes. An extended transmission delay may be utilized in low end UEs, which may be made less complex and more energy efficient.

However, in other embodiments the pre-configured transmission delay T_{UG-R} is less than 4 subframes. Hence, the processing time gained by the solution can also be utilized to reduce the end-to-end access delay.

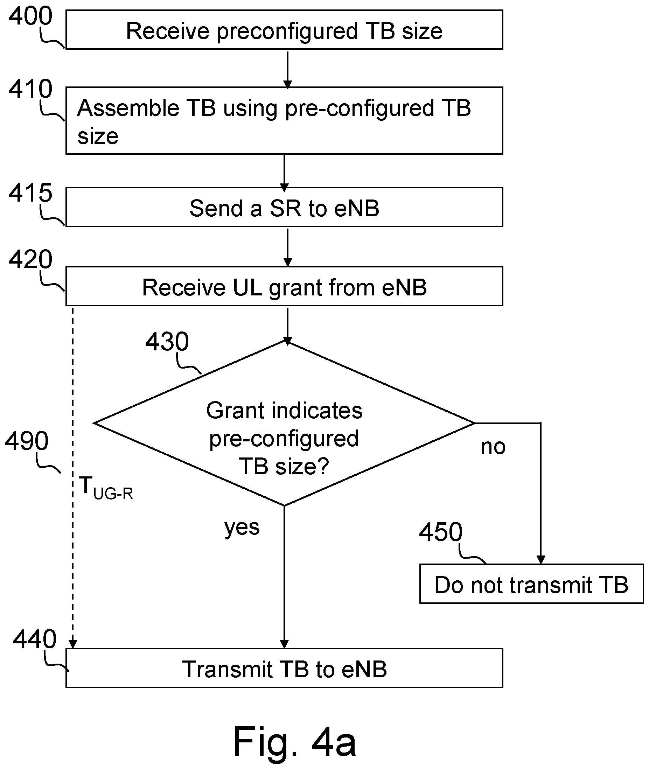

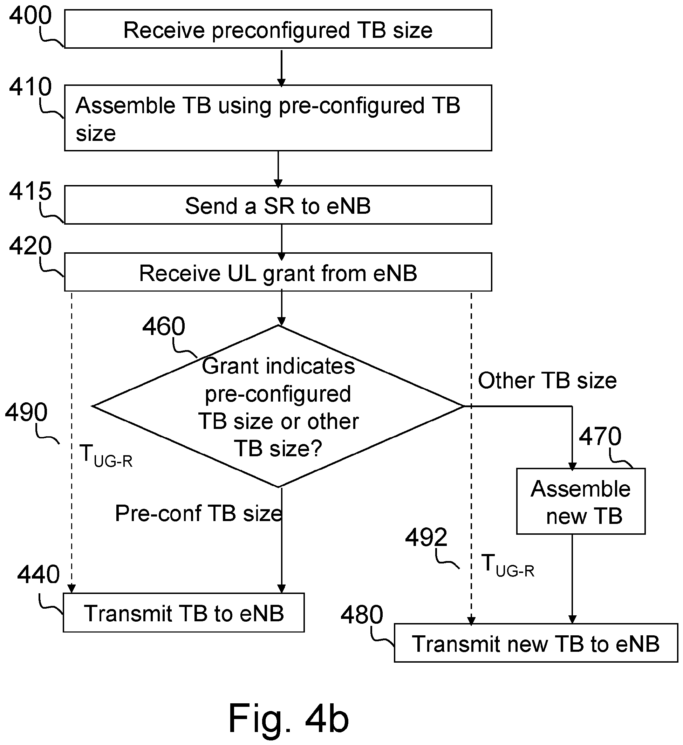

**Figure 4a** and **4b** are flowcharts of the method in a UE for enabling dynamic resource allocation in a wireless communication system according to embodiments. The UE communicates with a network node such as an eNB which dynamically allocates resources for uplink transmission. The embodiments assume that a network node runs corresponding methods in accordance with embodiments described below. It may be assumed that the UE is pre-configured with a TB size (or T_{UG-R}-TB size pair) i.e. the preconfigured TB size (or T_{UG-R}-TB size pair) is proactively agreed upon by the UE and the eNB. The pre-configured TB size (or T_{UG-R}-TB size pair) has been pre-configured in either of the ways mentioned above. This information may e.g. be exchanged between the UE and the network node illustrated with step 400 in **Figure 4a** and **4b****.** In one embodiment the pre-configured transport block size (or T_{UG-R}-TB size pair) could be comprised in a dedicated message or in a broadcast message sent from the network node to the UE. The dedicated message could be e.g., a Radio Resource Control, RRC, message, a Medium Access Control,
MAC, message or a message transmitted on a Physical Downlink Control Channel, PDCCH. For example, the eNB may signal the pre-configured TB size (or T_{UG-R}-TB size pair) through dedicated RRC signaling, e.g. in the RRCConnectionSetup message or using an RRCConnectionReconfiguration message. The RRCConnectionReconfiguration message may also be used for subsequent changes or removal of the pre-configured TB size (or T_{UG-R}-TB size pair). The higher layer signaling, as the RRC signalling, provides for a more robust way of pre-configuring the UE.
Moreover, when the eNB indicates the pre-configured TB size (or T_{UG-R}-TB size pair) to the UE through PDCCH signaling, a special "dummy" UL grant may be used. The "dummy" UL grant may be characterized by any of a Radio Network Temporary Identifier (RNTI) which is UE unique (but different from the regular UE unique C-RNTI), a dummy Physical Resource Blocks (PRB) assignment associated with some characteristic value that indicates that it concerns a "dummy", an explicit indicator, a reserved Modulation and Coding Scheme (MCS) and Redundancy Version (RV) code point, or an explicit TB size parameter (with or a without an explicit indication of a possible associated T_{UG-R}). If an explicit indicator or an explicit TB size parameter (and possible associated T_{UG-R} parameter) is used, the introduction of one of these new parameters implies that one or more new Downlink Control Information (DCI) format(s) of the uplink grant would be needed.
Furthermore, the eNB may indicate the pre-configured TB size (or T_{UG-R}-TB size pair) to the UE in a broadcast message, such as a broadcast message containing system information. The pre-configured TB size (or T_{UG-R}-TB size pair) could be indicated per UE category, wherein different pre-configured TB sizes (or T_{UG-R}-TB size pairs) may be indicated for different UE categories.

In one embodiment the UE could send a request for a specific pre-configured transport block size (or T_{UG-R}-TB size pair) to the network node. The request could be comprised in a Radio Resource Control, RRC, message or in a Medium Access Control, MAC, message. This may be done proactively, i.e. not in conjunction with a request for uplink resources. Alternatively, the UE may indicate the desired TB size (or T_{UG-R}-TB size pair) in a scheduling request sent in conjunction with a PUSCH transmission, e.g. in the form of an extension to the BSR MAC Control Element. The UE may then assume that the requested specific pre-configured TB size (or T_{UG-R}-TB size pair) is agreed upon and immediately continue the processing of data with the specific pre-configured TB size.
Furthermore, the decision whether or not to pre-configure the UE with a TB size (or T_{UG-R}-TB size pair), as well as the decision what pre-configured TB size (or T_{UG-R}-TB size pair) to choose may be based on at least any of a UE category indication, a UE capability indication, the specific pre-configured TB size (or T_{UG-R}-TB size pair) requested by the UE, a policy based rule, e.g. an operators policy and load conditions in the wireless communication system.

In one embodiment the decision is based on the request for the specific pre-configured transport block size (or T_{UG-R}-TB size pair) from the UE, i.e. the explicit request for a certain TB size (or T_{UG-R}-TB size pair). One alternative for indicating such a request could be to comprise an indication in the RRCConnectionSetupComplete message, but potentially any RRC message sent from the UE to the eNB could be used, such as the UECapabilitylnformation message or a new RRC message. A more dynamic alternative approach could be that the UE indicates the specific TB size (or T_{UG-R}-TB size pair) in a scheduling request sent in conjunction with a PUSCH transmission, e.g. in the form of an extension to the BSR MAC Control Element. Then the UE assumes that the request will be granted and hence immediately starts preparing a TB of the requested, i.e. pre-configured, TB size. With this alternative dynamic approach the pre-configuring of the UE with a TB size (or T_{UG-R}-TB size pair) would be integrated with the transmitting of the scheduling request.

In a further embodiment the decision is based on at least any of the UE category indication or the UE capability indication. One alternative for indicating the UE category or capability could be to comprise the indication in a UECapabilitylnformation message signaled from the UE to the eNB. As an example, a UE category or capability may indicate that the UE, due to low-cost hardware implementation, normally does not support greater TB sizes than a certain size X, e.g. due to time constraints in the turbo coder hardware, but if the available data processing time is extended, the UE can support TB sizes larger than the certain size X, e.g. a size Y where Y > X. The eNB may then choose a preconfigured TB size Z to be equal to size Y, i.e. Z = Y or a size between X and Y, i.e. X < Z < Y.

In yet a further embodiment the decision is based on subscription data forwarded from the HSS to the eNB via the MME. For example, the subscription data could be forwarded in an S1AP INTIAL CONTEXT SETUP REQUEST message. As an alternative a Service Profile Identifier (SPID) may be utilized. The SPID may be forwarded to the eNB e.g. using the Subscriber Profile ID for Radio Access Technology (RAT)/Frequency priority information element in the S1AP INITIAL CONTEXT SETUP REQUEST message. An alternative to using the SPID could be to introduce a new parameter in the subscriber data records, which also could be forwarded to the eNB in an S1AP INTIAL CONTEXT SETUP REQUEST message.

In a further embodiment the decision is based on the current load conditions and/or operator policies. One alternative could be to select a smaller TB size during periods of high load in the network and then a larger TB size during periods with low load.

Furthermore, in the flowchart of **Figure 4a** it is shown that the method of embodiments of the invention comprises assembling 410 a TB of the pre-configured TB size prior to receiving an uplink grant. In an embodiment the method additionally comprises inserting CRC in the TB prior to receiving the uplink grant. In yet an exemplary embodiment the method additionally comprises performing segmentation of the TB prior to receiving the uplink grant. In yet an embodiment the method additionally comprises performing turbo coding of the TB prior to receiving the uplink grant.

It should be noted that the whole or parts of the step of assembling 410 and the additional steps concerning the processing of the TB described above may be performed prior to or in parallel with a step of sending 415 a scheduling request (SR) to the network node.

The UE sends the SR to the eNB when the UE has data to transmit. The SR is transmitted on a PUCCH resource dedicated for the UE. However, the SR on the PUCCH does not include any parameters. The only way it carries information is through the use of a specific PUCCH resource, which identifies the originating UE. In one embodiment the UE is only allowed to use the pre-configured TB size (or T_{UG-R}-TB size pair) and hence by transmitting the SR on the PUCCH resource the use of the pre-configured TB size (or T_{UG-R}-TB size pair) is indicated to the eNB. That is, the SR always concerns a request for uplink resources for the pre-configured TB size (or T_{UG-R}-TB size pair). However, in another embodiment the use of the pre-configured TB size (or T_{UG-R}-TB size pair) is an alternative to the regular SR for dynamic resource allocation described in the background section. In this case one method of enabling indication of a request for a pre-configured TB size (or T_{UG-R}-TB size pair) through a SR is that the eNB allocates a specific PUCCH resource to the UE to be used for this purpose in addition to the regular PUCCH resource.

In one embodiment the indication of the request for a pre-configured TB size through a SR is that subscription data of a user may indicate that the UE of that user always use the pre-configured TB size (or T_{UG-R}-TB size pair). Thus, the SR from the UE concerns the pre-configured TB size (or T_{UG-R}-TB size pair). Subscription data is stored in a HSS comprised in the wireless communication system and could be forwarded from the HSS to the eNB by the MME also comprised in the wireless communication system. For example, the subscription data could be included in the S1AP INITIAL CONTEXT SETUP REQUEST message, possibly using the Subscriber Profile ID for RAT/Frequency priority information element.

In one embodiment the indication of the request for the pre-configured TB size (or T_{UG-R}-TB size pair) is that the UE indicates that the subsequent SRs for a resource allocation are requests for the pre-configured TB size through higher layer signalling such as the RRC signalling to the eNB, e.g. in the RRCConnectionSetupComplete message or the RRCConnectionRequest message.

In yet another embodiment the indication of the request for the pre-configured TB size (or T_{UG-R}-TB size pair) is associated with the category indication of the UE or the capability indication of the UE. The indication of category or capability could be signaled to the eNB through higher layer signalling such as the RRC signalling, e.g. in the UECapabilitylnformation message.

In another embodiment the indication of the request for the pre-configured TB size (or T_{UG-R}-TB size pair) could be that the UE sends, in conjunction with a Physical Uplink Shared Channel, PUSCH, transmission to the network node, a request for resource allocation. The pre-configured transport block size is then explicitly indicated in the request, wherein a possible associated T_{UG-R} may or may not be explicitly indicated too. The indication could be in the form of an extension of the BSR MAC Control Element. Then the UE assumes that the request will be granted and hence immediately starts preparing a TB of the pre-configured TB size. As mentioned above this alternative of indicating to the eNB the use of the pre-configured TB size would be integrated with the pre-configuring of the UE with the TB size. Otherwise, if no such explicit indication of TB size (or T_{UG-R}-TB size pair) is included in conjunction with a PUSCH transmission, a non-zero BSR transmitted in a BSR MAC Control Element in conjunction with a PUSCH transmission may implicitly indicate the TB size (or T_{UG-R}-TB size pair). With this alternative a scheduling request in the form of a non-zero BSR transmitted in conjunction with a PUSCH transmission implicitly indicates that the same type of resource allocation, i.e. either with preconfigured TB size (and possible associated T_{UG-R}) or dynamic TB size (i.e. a regular uplink grant), is expected as the one that allocated the resources for the PUSCH transmission. That is, if the uplink grant that allocated resources for the PUSCH transmission was a regular uplink grant (i.e. without a preconfigured TB size), the uplink grant triggered by the non-zero BSR should also be a regular uplink grant. On the other hand, if the uplink grant that allocated resources for the PUSCH transmission used a preconfigured TB size (and possible associated T_{UG-R}), then the uplink grant triggered by the non-zero BSR should use the same preconfigured TB size (and possible associated T_{UG-R}). If the uplink grant that allocated resources for the PUSCH transmission was also triggered by a non-zero BSR in conjunction with a preceding PUSCH transmission, then the type of this uplink grant should be the same as the uplink grant that allocated the resources for the preceding PUSCH transmission and so on.

The method further comprises receiving 420 the uplink grant from the network node. The uplink grant indicates that the granted resource allocation concerns a certain TB size (or T_{UG-R}-TB size pair). In a step 430 the UE determines whether the uplink grant concerns the pre-configured TB size (or T_{UG-R}-TB size pair). In one embodiment the eNB is bound by the SR, such that it may not allocate any other TB size (or T_{UG-R}-TB size pair) in response to a SR. Thus, the combination of allocated resources and MCS indicated in the uplink grant should result in the pre-configured TB size. In this embodiment the only option available to the eNB when reacting to such a SR is to either allocate uplink transmission resources accordingly or not allocate any transmission resources at all. However, if the uplink grant indicates an allocated resource for the pre-configured transport block size (or T_{UG-R}-TB size pair) the UE transmits 440 the transport block using the allocated resources to the network node. However, if the uplink grant does not indicate an allocated resource for the pre-configured transport block size, the processed TB is not transmitted 450 to the eNB.

In a further embodiment the pre-configured TB size is associated with at least one transmission delay, T_{UG-R}. The transmission delay T_{UG-R} 490 is the time required between a point of receiving the uplink grant and a starting point of transmitting the transport block in the UE. When the pre-configured TB size is associated with a specific transmission delay the transmitting of the transport block to the network node 440 is performed with the transmission delay associated with the transport block size indicated in the received uplink grant.
An advantage of embodiments is that they enable using a shorter time between the uplink grant (i.e. allocation of uplink transmission resources) and the allocated transmission resources, thereby enabling a shorter access delay. Another advantage of embodiments is that they enable using a longer time between the uplink grant (i.e. allocation of uplink transmission resources) and the allocated transmission resources, thereby allowing low-complexity, low-energy devices more processing time for the preparation of the data to be transmitted.

The transmission delay T_{UG-R} is determined based on at least any of the user equipment category indication, the user equipment capability indication, the transmission delay requested by the user equipment and the pre-configured transport block size.

In one embodiment multiple T_{UG-R}-TB size pairs could be preconfigured and the eNB could allocate one PUCCH resource to be used by the UE to signaling scheduling requests for each such T_{UG-R}-TB size pair. Note that two different preconfigured T_{UG-R}-TB size pairs may differ in the T_{UG-R} parameter, the TB size or both. However, allowing configuration of two different T_{UG-R} values associated with the same TB size (as two different T_{UG-R}-TB size pairs) complicates the uplink grant indication. This is due to the fact that the currently specified uplink grant format does not indicate any T_{UG-R} value, neither explicitly nor implicitly. Therefore a new kind of indication would have to be introduced in order to resolve the otherwise resulting potential ambiguity in which T_{UG-R} value to use when a certain pre-configured TB size is indicated in the uplink grant. Such a new indication could be a new parameter in the uplink grant e.g. in the form of a new DCI format. Alternatively, a dedicated RNTI could be allocated to each ambiguous T_{UG-R} value, such that the RNTI indicates which T_{UG-R} value associated with the granted preconfigured TB size the uplink grant addresses. Alternatively, to avoid such indications of which of a setoff ambiguous T_{UG-R} values that the uplink grant addresses, configuring multiple T_{UG-R}-TB size pairs which differ only in the T_{UG-R} value may not be allowed.

In **Figure 4b** the flowcharts of an alternative embodiment of the method in a UE is illustrated. In this embodiment the UE determines in a step 460 whether the uplink grant concerns the pre-configured TB size or another second TB size different from the pre-configured TB size. If the uplink grant indicates an allocated resource for the pre-configured transport block size the UE finalizes the assembly of the transport block and transmits 440 the transport block to the network node using the allocated resources. However, if the uplink grant indicates the second TB size the UE starts assembling 470 a TB of the second transport block size and transmits 480 the second TB to the eNB using the allocated resources.

In a further embodiment the UE is pre-configured with more than one pre-configured TB sizes. Moreover, the UE comprises a data buffer of a bearer including data to be transmitted on the bearer. In some cases the UE includes several data buffers and several bearers. The UE may then select the pre-configured TB size of at least two pre-configured TB sizes based on the size of the content of the data buffer of the bearer and start assembling of the TB with the selected pre-configured TB size. To enable the UE to indicate which of the multiple pre-configured TB sizes (or T_{UG-R}-TB size pairs) that is requested with a scheduling request, multiple PUCCH resources, one for each pre-configured TB size (or T_{UG-R}-TB size pairs) could be allocated to the UE for this purpose. However, as an alternative to allocating one PUCCH resource for signaling scheduling requests for each of the multiple TB sizes or T_{UG-R}-TB size pairs only one PUCCH resource is allocated for indication of a pre-configured TB size or T_{UG-R}-TB size pair. With this alternative the UE instead starts assembling of at least two TBs with the different pre-configured TB sizes. Then upon reception of the uplink grant only one of the processed TBs is transmitted and which one is transmitted depends on for which TB size the eNB has granted resources.

In a further embodiment the pre-configured TB size is associated with at least one transmission delay, T_{UG-R}, respectively. The transmission delay T_{UG-R} is the time required between a point of receiving the uplink grant and a starting point of transmitting the transport block in the UE, i.e. the time between the reception of the uplink grant and the uplink resources that the uplink grant allocates. When the pre-configured TB size is associated with a specific transmission delay the transmitting of the transport block to the network node 440, 480 is performed with the transmission delay 490, 492 associated with the transport block size indicated in the received uplink grant.

In one embodiment the UE receives an uplink grant from the eNB wherein the uplink grant indicates an allocated resource for a second TB size which is associated with a T_{UG-R} 492. If the T_{UG-R} 492 associated with the second TB size exceeds a T_{UG-R} 490 associated with the pre-configured TB size with at least a certain minimum margin, the UE assembles 470 a TB of the second TB size.

The UE transmits 480 the assembled TB to the eNB using the allocated resources.

The minimum margin may be defined as an absolute time measure, i.e. in terms of the difference between the T_{UG-R} 492 associated with the second TB size and the T_{UG-R} 490 associated with the pre-configured TB size, or as a relative measure, i.e. in terms of the ratio between the T_{UG-R} 492 associated with the second TB size and the T_{UG-R} 490 associated with the pre-configured TB size, or in another way that takes any combination of the pre-configured TB size, the second TB size, the T_{UG-R} 490 associated with the pre-configured TB size and/or T_{UG-R} 492 associated with the second TB size into account.

It may be beneficial to allow the eNB the flexibility to allocate another TB size than the pre-configured TB size selected by the UE, when the circumstances are such that this is both possible and beneficial. Such circumstances may e.g. be that more resources in the cell and eNB are available, the selected T_{UG-R} is smaller than the regular T_{UG-R} and a Buffer Status Report from the UE has indicated that more uplink data is awaiting transmission than would fit in the selected pre-configured TB size. Hence, at least as a potential option, using a regular UL grant the eNB may indicate any TB size as long as the associated T_{UG-R} is sufficiently longer than the requested T_{UG-R} to allow enough time for the UE to perform the required processing between the reception of the uplink grant and the start of uplink data transmission. The associated T_{UG-R} would typically be the currently specified 4 subframes i.e. approximately 4 ms. However, an option could be to pre-configure several T_{UG-R}-TB size pairs. Then the eNB could deviate from the selected pre-configured TB size and T_{UG-R} of the UE when allocating resources to the UE and implicitly indicating in the uplink grant a TB size belonging to one of the other pre-configured TB size pairs, provided that the T_{UG-R} associated with this TB size is sufficiently longer than the requested T_{UG-R}. All other TB sizes, i.e. those that do not belong to a preconfigured T_{UG-R}-TB size pair, would by default be associated with the regular 4 subframe transmission delay. Yet another possible option could be that the eNB could explicitly indicate a T_{UG-R}, in the uplink grant. Such a new indication could be a new parameter in the uplink grant e.g. in the form of a new DCI format. Irrespective of which option that is used, when deviating from a pre-configured TB size indicated for a scheduling request, the eNB should use a T_{UG-R} that is greater than the requested one in order to allow more processing time for the UE.

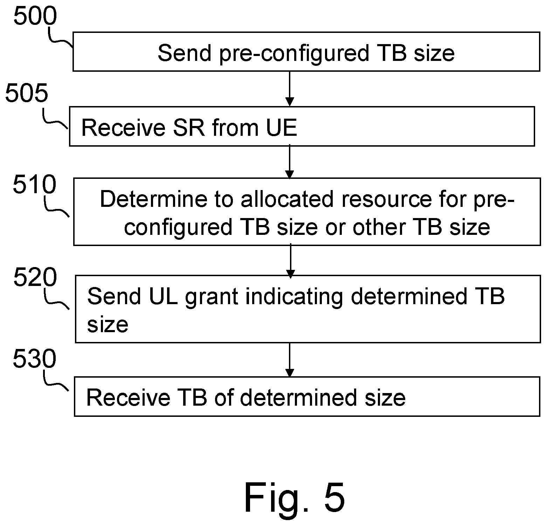

**Figure 5** is a flowchart of the method in a network node such as an eNB for enabling dynamic resource allocation in a wireless communication system according to embodiments. The eNB communicates with a UE. The embodiments assume that the UE runs corresponding method in accordance with embodiments described above. It may also be assumed that the UE is pre-configured with a TB size (or T_{UG-R}-TB size pair). The pre-configured TB size (or T_{UG-R}-TB size pair) information may e.g. be exchanged between the eNB and the UE in a step 500, as described above. The eNB receives 505 a SR from the UE indicating that the UE has data to transmit and therefore requests allocation of resources to use when transmitting that data. The SR is transmitted on a PUCCH resource dedicated for the UE. However, the SR on the PUCCH does not include any parameters. The only way it carries information is through the use of a specific PUCCH resource, which identifies the originating UE. In one embodiment the UE is only allowed to use the pre-configured TB size (or T_{UG-R}-TB size pair) and hence by transmitting the SR on the PUCCH resource the use of the pre-configured TB size (or T_{UG-R}-TB size pair) is indicated to the eNB. That is, the SR received in the eNB always concerns a request for uplink resources for the pre-configured TB size (or T_{UG-R}-TB size pair). However, in another embodiment the use of the pre-configured TB size (or T_{UG-R}-TB size pair) is an alternative to the use of dynamically allocated (through regular uplink grants) TB sizes described in the background section. In this case one method of enabling indication of a request for a pre-configured TB size (or T_{UG-R}-TB size pair) through a SR is that the eNB has allocated a specific PUCCH resource to the UE to be used for this purpose in addition to the regular PUCCH resource.

In one embodiment the indication of the request for a pre-configured TB size (or T_{UG-R}-TB size pair) through a SR is that subscription data of a user may indicate that the UE of that user always use the pre-configured TB size (or T_{UG-R}-TB size pair). Thus, the SR received from the UE concerns the pre-configured TB size (or T_{UG-R}-TB size pair). Subscription data is stored in a HSS comprised in the wireless communication system and could be forwarded from the HSS to the eNB by the MME also comprised in the wireless communication system. For example, the subscription data could be included in the S1AP INITIAL CONTEXT SETUP REQUEST message, possibly using the Subscriber Profile ID for RAT/Frequency priority information element.

In one embodiment the indication of the request for the pre-configured TB size (or T_{UG-R}-TB size pair) is that the UE indicates that the subsequent SRs for a resource allocation are requests for the pre-configured TB size (with a possible associated T_{UG-R}) through higher layer signalling such as the RRC signalling to the eNB, e.g. in the RRCConnectionSetupComplete message or the RRCConnectionRequest message.

In yet another embodiment the indication of the request for the pre-configured TB size (or T_{UG-R}-TB size pair) is associated with the category indication of the UE or the capability indication of the UE. The indication of category or capability could be signaled to the eNB through higher layer signalling such as the RRC signalling, e.g. in the UECapabilitylnformation message. Hence, with this embodiment indication of a certain UE category or UE capability would signal to the eNB that this UE uses only a certain pre-configured TB size (or T_{UG-R}-TB size pair) and that consequently all SRs from this UE are requests for resources to be allocated for transmission of this pre-configured TB size (with a possible associated T_{UG-R}).

In another embodiment the indication of the request for the pre-configured TB size (or T_{UG-R}-TB size pair) could be that the eNB receives, in conjunction with a preceding Physical Uplink Shared Channel, PUSCH, transmission from the UE, a request for resource allocation and then the pre-configured transport block size is explicitly indicated in the request. The indication could be in the form of an extension of the BSR MAC Control Element. As mentioned above this alternative of indicating to the eNB the use of the pre-configured TB size (or T_{UG-R}-TB size pair) would be integrated with the pre-configuring of the UE with the TB size (or T_{UG-R}-TB size pair).

Upon receiving the SR, the eNB determines 510 whether to allocate a resource for the pre-configured transport block size or for a second transport block size different from the pre-configured transport block size. The eNB then sends 520 an uplink grant to the UE. The uplink grant indicates the allocated resource for the determined TB size. Thereupon, the eNB receives 530 a TB of the determined TB size from the UE. That is, if the uplink grant indicates an allocated resource for the pre-configured transport block size the eNB will receive a TB of the pre-configured TB size but if the uplink grant indicates an allocated resource for the second transport block size the eNB will receive a TB of the second TB size transport block.

In one embodiment the eNB is bound by the SR, such that it may not allocate any other TB size in response to the SR. In this embodiment the only option available to the eNB when reacting to such a SR is to either allocate uplink transmission resources accordingly or not allocate any transmission resources at all. Thus, the combination of allocated resources and MCS should result in that the uplink grant indicates that the grant concerns the pre-configured TB size.

In a further embodiment the UE is pre-configured with more than one pre-configured TB sizes. Moreover, the UE comprises a data buffer of a bearer including data to be transmitted on the bearer. In some cases the UE includes several data buffers and several bearers. The UE may then select the pre-configured TB size of at least two pre-configured TB sizes based on the size of the content of the data buffer of the bearer and start assembling of the TB with the selected pre-configured TB size. To enable the UE to indicate which of the multiple pre-configured TB sizes (or T_{UG-R}-TB size pairs) that is requested with a scheduling request, multiple PUCCH resources, one for each pre-configured TB size (or T_{UG-R}-TB size pair) could be allocated to the UE for this purpose. However, as an alternative to allocating one PUCCH resource for signaling scheduling requests for each of the multiple TB sizes or T_{UG-R}-TB size pairs only one PUCCH resource is allocated for indication of a pre-configured TB size or T_{UG-R}-TB size pair. With this alternative the UE starts assembling of at least two TBs with the different pre-configured TB sizes and the eNB determines 510 whether to allocate a resource for either of the pre-configured transport block sizes or for a second transport block size different from the pre-configured transport block sizes. The eNB then sends 520 the uplink grant to the UE. The uplink grant indicates the allocated resource for the determined TB size. Thereupon, the eNB receives 530 a TB of the determined TB size from the UE.

In a further embodiment the pre-configured TB size is associated with a transmission delay T_{UG-R}. If the UE is pre-configured with more than one TB sizes, then the TB sizes are associated with one transmission delay, T_{UG-R}, each. The transmission delay T_{UG-R} is the time required between a point of receiving the uplink grant and a starting point of transmitting the transport block in the UE, i.e. the time between the reception of the uplink grant and the uplink resources that the uplink grant allocates.

The transmission delay T_{UG-R} is determined based on at least any of the user equipment category indication, the user equipment capability indication, the transmission delay requested by the user equipment and the pre-configured transport block size.

In one embodiment the eNB determines 510 to allocate a resource for a TB size associated with a T_{UG-R} 492 different from the pre-configured TB size. The eNB then sends 520 the uplink grant to the UE indicating the allocated resource for the determined TB size. If the T_{UG-R} 492 associated with the determined TB size exceeds the T_{UG-R} 490 associated with the pre-configured TB size with at least a certain minimum margin, the UE will assemble a TB of the determined TB size and send it to the eNB using the allocated resource. The eNB receives 530 the TB of the determined TB size from the UE.

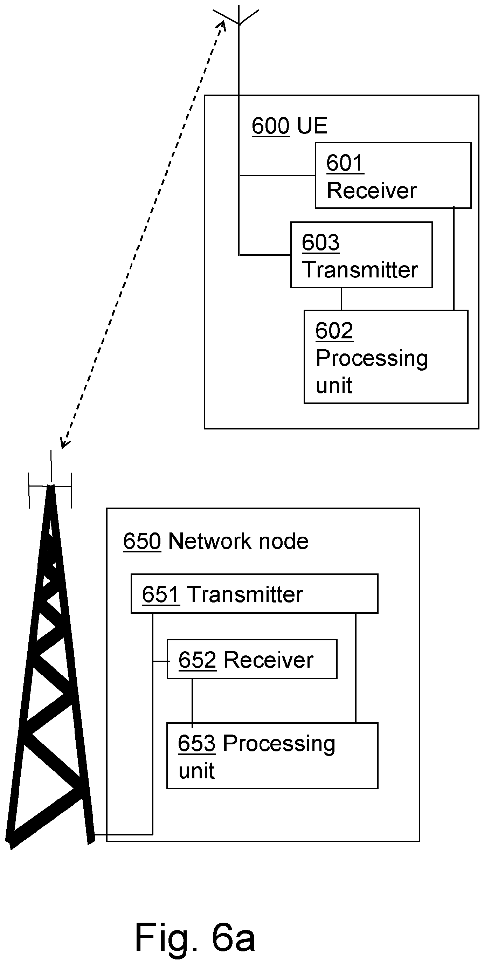

A network node 650 and a user equipment 600 for a wireless communication system is schematically illustrated in the block diagram in **Figure 6a****,** according to embodiments. The network node 650 and the UE 600 are configured to perform the methods described above in connection with **Figure 4a-4b** and **5.** The UE 600 is configured to communicate with the UE. The UE 600 comprises a processing unit 602 configured to assemble, prior to receiving an uplink grant, a transport block of a pre-configured transport block size to be transmitted to the network node 650.

In one embodiment the UE 600 further comprises a receiver 601 configured to receive the pre-configured transport block size (with a possible associated T_{UG-R}) from the network node 650.

In one embodiment the UE 600 further comprises a transmitter 603 configured to send a request for a specific pre-configured transport block size (possibly with an associated T_{UG-R}) to the network node 650.

In one embodiment the UE 600 comprises at least one data buffer of at least one bearer. The at least one data buffer is configured to include data to be transmitted on the at least one bearer. The processing unit 602 included in the UE is further configured to select the pre-configured transport block size of at least two pre-configured TB sizes based on the size of the content of the at least one data buffer of the at least one bearer.

In one embodiment the transmitter 603 included in the UE 600 is further configured to send a SR to the network node. The SR comprises an indication of a request for a resource allocation for the pre-configured transport block size (with a possible associated T_{UG-R}).

In one embodiment the transmitter 603 included in the UE 600 is further configured to send, in conjunction with a preceding Physical Uplink Shared Channel, PUSCH, transmission to the network node, a request for resource allocation wherein the pre-configured transport block size is explicitly indicated in the request.

In one embodiment the receiver 601 included in the UE 600 is further configured to receive the uplink grant from the network node, and if the uplink grant indicates an allocated resource for the pre-configured transport block size (with the possible associated T_{UG-R}), the transmitter 603 is further configured to transmit the transport block to the network node.

In one embodiment the receiver 601 is further configured to receive the uplink grant from the network node, and if the uplink grant indicates an allocated resource for a second transport block size different from the pre-configured transport block size, the processing unit 602 is further configured to assemble a second transport block of the second transport block size to be transmitted to the network node. Moreover, the transmitter 603 is further configured to transmit the second transport block to the network node.

In one embodiment the receiver 601 is further configured to receive the uplink grant from the eNB wherein the uplink grant indicates an allocated resource for a second TB size which is associated with a T_{UG-R}. The processing unit 602 is further configured to assemble a second TB of the second TB size to be transmitted to the eNB, if the T_{UG-R} associated with the second TB size exceeds the T_{UG-R} associated with the pre-configured TB size with at least a certain minimum margin.

In one embodiment the processing unit 602 is further configured to insert, prior to receiving the uplink grant, Cyclic Redundancy Check, CRC, in the transport block. In further embodiments the processing unit 602 is configured to perform segmentation of the transport block and/or perform turbo coding of the transport block, prior to receiving the uplink grant.

Also illustrated in **Figure 6a** is the network node 650. The network node which could be a radio base station such as the eNB is configured to communicate with the UE 600. The network node comprises a processing unit 653 configured to determine whether to allocate a resource for a pre-configured transport block size or for a second transport block size different from the pre-configured transport block size. The network node 650 further comprises a transmitter 651 configured to send an uplink grant to the UE 600. Moreover, the uplink grant indicates the allocated resource for the determined transport block size.

In one embodiment the transmitter 651 included in the network node 650 is further configured to send the pre-configured transport block size to the UE 600.

In one embodiment the network node 650 further comprises a receiver 652 configured to receive a request for a specific pre-configured transport block size (with a possible associated T_{UG-R}) from the UE 600.

In one embodiment the receiver 652 included in the network node 650 is further configured to receive a SR from the UE, the SR comprises an indication of a request for a resource allocation for the pre-configured transport block size, wherein the pre-configured transport block size may or may not have a non-regular T_{UG-R} associated with it.

In one embodiment the receiver 652 included in the network node 650 is further configured to receive, in conjunction with a preceding Physical Uplink Shared Channel, PUSCH, transmission from UE 600, a request for resource allocation wherein the pre-configured transport block size (with a possible associated T_{UG-R}) is explicitly indicated in the request.

In one embodiment the receiver 652 included in the network node 650 is further configured to receive a transport block of the determined transport block size from the UE 600.

The units described above with reference to **Figure 6a** are logical units and do not necessarily correspond to separate physical units.

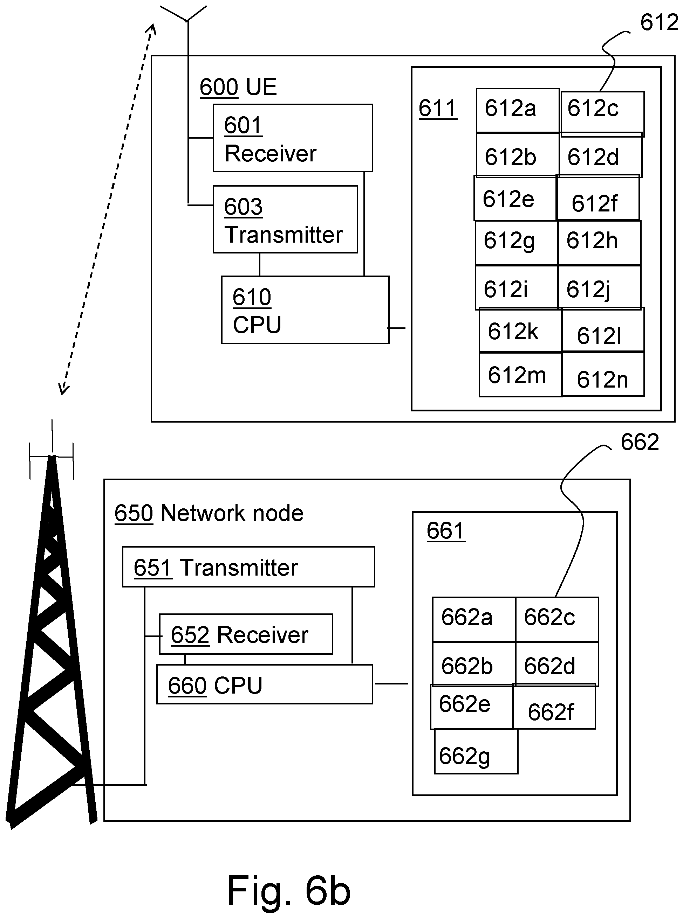

**Figure 6b** schematically illustrates an embodiment of the network node 650, and an embodiment of the UE 600 which are alternative ways of disclosing the embodiments illustrated in **Figure 6a****.** The UE 600 comprises the communication units 601 and 603, which are already described above with reference to **Figure 6a****.** The UE 600 also comprises a Central Processing Unit (CPU) 610 which may be a single unit or a plurality of units. Furthermore, the UE 600 comprises at least one computer program product 611 in the form of a non-volatile memory, e.g. an EEPROM (Electrically Erasable Programmable Read-Only Memory), a flash memory or a disk drive. The computer program product 611 comprises a computer program 612, which comprises code means which when run on the UE 600 causes the CPU 610 on UE 600 to perform the steps of the method described earlier in conjunction with **Figure 4a-4b****.**

Hence in the embodiments described, the code means in the computer program 612 of the UE 600 comprises a module 612a for assembling, prior to receiving an uplink grant, a transport block of a pre-configured transport block size. In one embodiment the computer program 612 also comprises a module 612b for receiving the pre-configured transport block size (with a possible associated T_{UG-R}) from the network node. In one embodiment the computer program 612 also comprises a module 612c for sending a request for a specific pre-configured transport block size (with a possible associated T_{UG-R}) to the network node. In one embodiment the computer program 612 also comprises a module 612d for selecting the pre-configured transport block size (with a possible associated T_{UG-R}) of at least two pre-configured TB sizes (with possible associated respective T_{UG-R} values) based on the size of the content of at least one data buffer of at least one bearer. In one embodiment the computer program 612 also includes a module 612e for sending a scheduling request to the network node, wherein the scheduling request comprises an indication of a request for a resource allocation for the pre-configured transport block size (with a possible associated T_{UG-R}). In one embodiment the computer program 612 also includes a module 612f for sending, in conjunction with a Physical Uplink Shared Channel, PUSCH, transmission to the network node, a request for resource allocation wherein the pre-configured transport block size is explicitly indicated in the request (wherein the pre-configured transport block size may or may not have an associated non-regular T_{UG-R} and wherein this possible associated T_{UG-R} may or may not be explicitly indicated together with the indication of the pre-configured transport block size). In one embodiment the computer program 612 also includes a module 612g for receiving the uplink grant from the network node, and if the uplink grant indicates an allocated resource for the pre-configured transport block size, the computer program 612 also includes a module 612h for transmitting the transport block to the network node. In one embodiment the computer program 612 also includes a module 612i for receiving the uplink grant from the network node, and if the uplink grant indicates an allocated resource for a second transport block size different from the pre-configured transport block size the computer program 612 also includes a module 612j for assembling a second transport block of the second transport block size to be transmitted to the network node. The computer program 612 also includes a module 612k for transmitting the second transport block to the network node. In one embodiment the computer program 612 also includes a module 6121 for inserting, prior to receiving the uplink grant, Cyclic Redundancy Check, CRC, in the transport block. In a further embodiment the computer program 612 also includes a module 612m for forming segmentation of the transport block, prior to receiving the uplink grant. In yet a further embodiment the computer program 612 also includes a module 612n for performing turbo coding of the transport block, prior to receiving the uplink grant.

The code means may thus be implemented as computer program code structured in computer program modules. The modules 612a-n essentially perform the steps of the flow described in connection with **Figure 4a-4b****,** thus constituting part of the functionality of the UE 600 described in **Figure 6a****.** In other words, when the different modules 612a-n are run on the CPU 610, they correspond to the processing unit 602 of **Figure 6a****.**

Although the code means in the embodiments disclosed above in conjunction with **Figure 6b** are implemented as computer program modules, one or more of the code means may in alternative embodiments be implemented at least partly as so called firmware or programmable or non-programmable hardware circuits.

The network node 650 illustrated in **Figure 6b** comprises a Central Processing Unit (CPU) 660 which may be a single unit or a plurality of units. Furthermore, the network node 650 comprises at least one computer program product 661 in the form of a non-volatile memory, e.g. an EEPROM (Electrically Erasable Programmable Read-Only Memory), a flash memory or a disk drive. The computer program product 661 comprises a computer program 662, which comprises code means which when run on the network node 650 causes the CPU 660 on the network node 650 to perform the steps of the method described earlier in conjunction with **Figure 5****.**

Hence in the embodiments described, the code means in the computer program 662 of the network node 650 comprises a module 662a for determining whether to allocate a resource for a pre-configured transport block size or for a second transport block size different from the pre-configured transport block size. The computer program 662 also includes a module 662b for sending an uplink grant to the user equipment, wherein the uplink grant indicates the allocated resource for the determined transport block size.

In one embodiment the computer program 662 also includes a module 662c for sending the pre-configured transport block size (which may or may not have a non-regular T_{UG-R} value associated with it) to the user equipment. In one embodiment the computer program 662 also includes a module 662d for receiving a request for a specific pre-configured transport block size (with a possible associated T_{UG-R}) from the user equipment. In one embodiment the computer program 662 additionally comprises a module 662e for receiving a scheduling request from the user equipment, wherein the scheduling request comprises an indication of a request for a resource allocation for the pre-configured transport block size (with a possible associated T_{UG-R}). In one embodiment the computer program 662 also includes a module 662f for receiving, in conjunction with a Physical Uplink Shared Channel, PUSCH, transmission from the user equipment, a request for resource allocation wherein the pre-configured transport block size is explicitly indicated in the request (wherein the pre-configured transport block size may or may not have an associated non-regular T_{UG-R} and wherein this possible associated T_{UG-R} may or may not be explicitly indicated together with the indication of the pre-configured transport block size). In one embodiment the computer program 662 additionally comprises a module 662g for receiving a transport block of the determined transport block size from the user equipment. The code means may thus be implemented as computer program code structured in computer program modules. The modules 662a-g essentially perform the steps of the flow described in connection with **Figure 5****,** thus constituting part of the functionality of the network node 650 described in **Figure 6a****.** In other words, when the different modules 662a-g are run on the CPU 660, they correspond to the processing unit 653 of **Figure 6a****.**

Although the code means in the embodiments disclosed above in conjunction with **Figure 6b** are implemented as computer program modules, one or more of the code means may in alternative embodiments be implemented at least partly as so called firmware or programmable or non-programmable hardware circuits.

The above mentioned and described embodiments are only given as examples and should not be limiting. Other solutions, uses, objectives, and functions within the scope of the accompanying patent claims may be possible.

## Claims

1. A method in a user equipment for enabling dynamic resource allocation in a wireless communication system, wherein the user equipment communicates with a network node comprised in the wireless communication system, the method comprising
assembling uplink data (33, 410), prior to receiving (35, 420), from the network node, an uplink grant for transmission of the uplink data, into a transport block of a pre-configured transport block size to be transmitted to the network node.

2. The method according to claim 1, further comprising
receiving (400) the pre-configured transport block size from the network node.

3. The method according to claim 2, wherein the pre-configured transport block size is comprised in a dedicated message or in a broadcast message.

4. The method according to any of claims 1 to 3, wherein the pre-configured transport block size is based on at least any of a user equipment category indication, a user equipment capability indication, the specific pre-configured transport block size requested by the user equipment, subscription data associated with the user equipment, a policy based rule and load conditions in the wireless communication system.

5. The method according to any of claims 1 to 4, wherein the user equipment comprises at least one data buffer of at least one bearer, the at least one data buffer including data to be transmitted on the at least one bearer, the method further comprising
selecting the pre-configured transport block size of at least two pre-configured TB sizes based on the size of the content of the at least one data buffer of the at least one bearer.

6. The method according to any of claims 1 to 5, further comprising
sending (405) a scheduling request to the network node, the scheduling request comprises an indication of a request for a resource allocation for the pre-configured transport block size.

7. The method according to claim 6, wherein the indication is based on selecting a specific Physical Uplink Control Channel, PUCCH, resource allocated to the user equipment.

8. The method according to any of claims 1 to 7, further comprising
sending, in conjunction with a preceding Physical Uplink Shared Channel, PUSCH, transmission to the network node, a request for resource allocation wherein the pre-configured transport block size is explicitly indicated in the request.

9. The method according to any of claims 1 to 8, further comprising
receiving (35, 420) an uplink grant from the network node, and if the uplink grant indicates an allocated resource for the pre-configured transport block size,
transmitting (36, 440) the transport block to the network node.

10. The method according to any of claims 1 to 9, further comprising
receiving (420) an uplink grant from the network node, and if the uplink grant indicates an allocated resource for a second transport block size different from the pre-configured transport block size,
assembling (470) a second transport block of the second transport block size to be transmitted to the network node, and
transmitting (480) the second transport block to the network node.

11. A user equipment (600) for enabling dynamic resource allocation in a wireless communication system, wherein the user equipment is configured to communicate with a network node (650) comprised in the wireless communication system, the user equipment comprising a processing unit (602) configured to:
- assemble uplink data, prior to receiving, from the network node, an uplink grant for transmission of the uplink data, into a transport block of a pre-configured transport block size to be transmitted to the network node.

12. The user equipment according to claim 11, further comprises
a receiver (601) configured to receive the pre-configured transport block size from the network node.

13. The user equipment according to any of claims 11 to 12, further comprises
a transmitter (603) configured to send a request for a specific pre-configured transport block size to the network node.

14. The user equipment according to any of claims 11 to 13, wherein the user equipment comprises at least one data buffer of at least one bearer, the at least one data buffer configured to include data to be transmitted on the at least one bearer, the processing unit (602) further configured to:
- select the pre-configured transport block size of at least two pre-configured TB sizes based on the size of the content of the at least one data buffer of the at least one bearer.

15. The user equipment according to any of claims 11 to 14, the transmitter (603) further configured to
- send a scheduling request to the network node, the scheduling request comprises an indication of a request for a resource allocation for the pre-configured transport block size.

16. The user equipment according to any of claims 11 to 15, the transmitter (603) is further configured to:
- send, in conjunction with a preceding Physical Uplink Shared Channel, PUSCH, transmission to the network node, a request for resource allocation wherein the pre-configured transport block size is explicitly indicated in the request.

17. The user equipment according to any of claims 11 to 16, the receiver (601) further configured to:
- receive an uplink grant from the network node, wherein
if the uplink grant indicates an allocated resource for the pre-configured transport block size,
the transmitter (603) is further configured to:
- transmit the transport block to the network node.

18. The user equipment according to any of claims 11 to 17, the receiver (601) further configured to:
- receive an uplink grant from the network node, wherein
if the uplink grant indicates an allocated resource for a second transport block size different from the pre-configured transport block size,
the processing unit (602) is further configured to:
- assemble a second transport block of the second transport block size to be transmitted to the network node, and the transmitter (603) is further configured to:
- transmit the second transport block to the network node.

## Patentansprüche

1. Verfahren in einem Teilnehmerendgerät zum Ermöglichen dynamischer Ressourcenzuordnung in einem drahtlosen Kommunikationssystem, wobei das Teilnehmerendgerät mit einem im drahtlosen Kommunikationssystem beinhalteten Netzwerkknoten kommuniziert und das Verfahren umfasst
Zusammenstellen von Aufwärtsstreckendaten (33, 410) in einen Transportblock einer vorkonfigurierten Transportblockgröße, der an den Netzwerkknoten gesendet werden soll, vor dem Empfangen (35, 420), von dem Netzwerkknoten, einer Aufwärtsstreckenbewilligung für die Übertragung der Aufwärtsstreckendaten.

2. Verfahren nach Anspruch 1, ferner umfassend das Empfangen (400) der vorkonfigurierten Transportblockgröße vom Netzwerkknoten.

3. Verfahren nach Anspruch 2, wobei die vorkonfigurierte Transportblockgröße in einer zugehörigen Nachricht oder in einer Broadcastnachricht beinhaltet ist.

4. Verfahren nach einem der Ansprüche 1 bis 3, wobei die vorkonfigurierte Transportblockgröße auf mindestens einem von einer Teilnehmerendgerätskategorieangabe, einer Teilnehmerendgerätsfähigkeitsangabe, der spezifischen vorkonfigurierten Transportblockgröße, die von dem Teilnehmerendgerät angefordert wird, Abonnementdaten, die mit dem Teilnehmerendgerät verbunden sind, einer richtlinienbasierten Regel und Lastzuständen im drahtlosen Kommunikationssystem basiert.

5. Verfahren nach einem der Ansprüche 1 bis 4, wobei das Teilnehmerendgerät mindestens einen Datenpuffer von mindestens einem Träger umfasst, der mindestens eine Datenpuffer Daten umfasst, die auf dem mindestens einen Träger gesendet werden sollen und das Verfahren ferner umfasst
Auswählen der vorkonfigurierten Transportblockgröße von mindestens zwei vorkonfigurierten TB-Größen basierend auf der Größe des Inhaltes des mindestens einen Datenpuffers des mindestens einen Trägers.

6. Verfahren nach einem der Ansprüche 1 bis 5, ferner umfassend
Senden (405) einer Planungsanforderung an den Netzwerkknoten, wobei die Planungsanforderung eine Angabe einer Anforderung für eine Ressourcenzuordnung für die vorkonfigurierte Transportblockgröße umfasst.

7. Verfahren nach Anspruch 6, wobei die Angabe auf dem Auswählen einer spezifischen physikalischen Aufwärtsstreckensteuerkanal- PUCCH -Ressource basiert, die dem Teilnehmerendgerät zugewiesen ist.

8. Verfahren nach einem der Ansprüche 1 bis 7, ferner umfassend
Senden, in Verbindung mit einer vorhergehenden physikalischen gemeinsam genutzten Aufwärtsstreckenkanal- PUSCH -Übertragung an den Netzwerkknoten, einer Anforderung für Ressourcenzuordnung, wobei die vorkonfigurierte Transportblockgröße in der Anforderung explizit angegeben ist.

9. Verfahren nach einem der Ansprüche 1 bis 8, ferner umfassend
Empfangen (35, 420) einer Aufwärtsstreckenbewilligung vom Netzwerkknoten und, wenn die Aufwärtsstreckenbewilligung eine zugewiesene Ressource für die vorkonfigurierte Transportblockgröße angibt,
Senden (36, 440) des Transportblocks an den Netzwerkknoten.

10. Verfahren nach einem der Ansprüche 1 bis 9, ferner umfassend
Empfangen (420) einer Aufwärtsstreckenbewilligung vom Netzwerkknoten und, wenn die Aufwärtsstreckenbewilligung eine zugewiesene Ressource für eine von der vorkonfigurierten Transportblockgröße unterschiedliche zweite Transportblockgröße angibt,
Zusammenstellen (470) eines zweiten Transportblocks der zweiten Transportblockgröße, der an den Netzwerkknoten gesendet werden soll, und
Senden (480) des zweiten Transportblocks an den Netzwerkknoten.

11. Teilnehmerendgerät (600) zum Ermöglichen dynamischer Ressourcenzuordnung in einem drahtlosen Kommunikationssystem, wobei das Teilnehmerendgerät konfiguriert ist, mit einem Netzwerkknoten (650) zu kommunizieren, der im drahtlosen Kommunikationssystem beinhaltet ist, und das Teilnehmerendgerät eine Verarbeitungseinheit (602) umfasst, die konfiguriert ist zum:
- Zusammenstellen von Aufwärtsstreckendaten in einen Transportblock einer vorkonfigurierten Transportblockgröße, der an den Netzwerkknoten gesendet werden soll, vor dem Empfangen, von dem Netzwerkknoten, einer Aufwärtsstreckenbewilligung für die Übertragung der Aufwärtsstreckendaten.

12. Teilnehmerendgerät nach Anspruch 11, die ferner umfasst
einen Empfänger (601), der konfiguriert ist, die vorkonfigurierte Transportblockgröße vom Netzwerkknoten zu empfangen.

13. Teilnehmerendgerät nach einem der Ansprüche 11 bis 12, die ferner umfasst
einen Sender (603), der konfiguriert ist, eine Anforderung für eine spezifische vorkonfigurierte Transportblockgröße an den Netzwerkknoten zu senden.

14. Teilnehmerendgerät nach einem der Ansprüche 11 bis 13, wobei das Teilnehmerendgerät mindestens einen Datenpuffer von mindestens einem Träger umfasst, wobei der mindestens eine Datenpuffer konfiguriert ist, Daten zu beinhalten, die auf dem mindestens einen Träger gesendet werden sollen, und die Verarbeitungseinheit (602) ferner konfiguriert ist zum:
- Auswählen der vorkonfigurierten Transportblockgröße von mindestens zwei vorkonfigurierten TB-Größen basierend auf der Größe des Inhaltes des mindestens einen Datenpuffers des mindestens einen Trägers.

15. Teilnehmerendgerät nach einem der Ansprüche 11 bis 14, wobei der Sender (603) ferner konfiguriert ist zum
- Senden einer Planungsanforderung an den Netzwerkknoten, wobei die Planungsanforderung eine Angabe einer Anforderung für eine Ressourcenzuordnung für die vorkonfigurierte Transportblockgröße umfasst.

16. Teilnehmerendgerät nach einem der Ansprüche 11 bis 15, wobei der Sender (603) ferner konfiguriert ist zum:
- Senden, in Verbindung mit einer vorhergehenden physikalischen gemeinsam genutzten Aufwärtsstreckenkanal- PUSCH -Übertragung an den Netzwerkknoten, einer Anforderung für Ressourcenzuordnung, wobei die vorkonfigurierte Transportblockgröße explizit in der Anforderung angegeben ist.

17. Teilnehmerendgerät nach einem der Ansprüche 11 bis 16, wobei der Empfänger (601) ferner konfiguriert ist zum:
- Empfangen einer Aufwärtsstreckenbewilligung von dem Netzwerkknoten, wobei, wenn die Aufwärtsstreckenbewilligung eine zugewiesene Ressource für die vorkonfigurierte Transportblockgröße angibt, der Sender (603) ferner konfiguriert ist zum:
- Senden des Transportblocks an den Netzwerkknoten.

18. Teilnehmerendgerät nach einem der Ansprüche 11 bis 17, wobei der Empfänger (601) ferner konfiguriert ist zum:
- Empfangen einer Aufwärtsstreckenbewilligung von dem Netzwerkknoten, wobei, wenn die Aufwärtsstreckenbewilligung eine zugewiesene Ressource für eine zweite Transportblockgröße angibt, die sich von der vorkonfigurierten Transportblockgröße unterscheidet, die Verarbeitungseinheit (602) ferner konfiguriert ist zum:
- Zusammenstellen eines zweiten Transportblocks der zweiten Transportblockgröße, der an den Netzwerkknoten gesendet werden soll, und der Sender (603) ferner konfiguriert ist zum:
- Senden des zweiten Transportblocks an den Netzwerkknoten.

## Revendications

1. Procédé mis en oeuvre dans un équipement d'utilisateur pour permettre une affectation de ressources dynamique dans un système de communication sans fil, dans lequel l'équipement d'utilisateur communique avec un noeud de réseau inclus dans le système de communication sans fil, le procédé comportant les étapes ci-dessous consistant à :
assembler des données de liaison montante (33, 410), avant de recevoir (35, 420), en provenance du noeud de réseau, un octroi de liaison montante pour la transmission des données de liaison montante, dans un bloc de transport d'une taille de bloc de transport préconfigurée à transmettre au noeud de réseau.

2. Procédé selon la revendication 1, comportant en outre l'étape ci-dessous consistant à :
recevoir (400) la taille de bloc de transport préconfigurée en provenance du noeud de réseau.

3. Procédé selon la revendication 2, dans lequel la taille de bloc de transport préconfigurée est incluse dans un message dédié ou un message de diffusion.

4. Procédé selon l'une quelconque des revendications 1 à 3, dans lequel la taille de bloc de transport préconfigurée est basée sur au moins l'une quelconque des caractéristiques parmi une indication de catégorie d'équipement d'utilisateur, une indication de capacité d'équipement d'utilisateur, la taille de bloc de transport préconfigurée spécifique demandée par l'équipement d'utilisateur, des données d'abonnement associées à l'équipement d'utilisateur, une règle à base de politiques et des conditions de charge dans le système de communication sans fil.

5. Procédé selon l'une quelconque des revendications 1 à 4, dans lequel l'équipement d'utilisateur comporte au moins une mémoire tampon de données d'au moins une porteuse, ladite au moins une mémoire tampon de données incluant des données devant être transmises sur ladite au moins une porteuse, le procédé comportant en outre l'étape ci-dessous consistant à :
sélectionner la taille de bloc de transport préconfigurée d'au moins deux tailles de blocs TB préconfigurées sur la base de la taille du contenu de ladite au moins une mémoire tampon de données de ladite au moins une porteuse.

6. Procédé selon l'une quelconque des revendications 1 à 5, comportant en outre l'étape ci-dessous consistant à :
envoyer (405) une demande de planification au noeud de réseau, la demande de planification comportant une indication d'une demande pour une affectation de ressources pour la taille de bloc de transport préconfigurée.

7. Procédé selon la revendication 6, dans lequel l'indication est basée sur la sélection d'une ressource de canal de commande de liaison montante physique, PUCCH, spécifique affectée à l'équipement d'utilisateur.

8. Procédé selon l'une quelconque des revendications 1 à 7, comportant en outre l'étape ci-dessous consistant à :
envoyer, conjointement avec une transmission précédente de canal partagé de liaison montante physique, PUSCH, au noeud de réseau, une demande d'affectation de ressources, dans lequel la taille de bloc de transport préconfigurée est indiquée explicitement dans la demande.

9. Procédé selon l'une quelconque des revendications 1 à 8, comportant en outre les étapes ci-dessous consistant à :
recevoir (35, 420) un octroi de liaison montante en provenance du noeud de réseau, et si l'octroi de liaison montante indique une ressource affectée pour la taille de bloc de transport préconfigurée :
transmettre (36, 440) le bloc de transport au noeud de réseau.

10. Procédé selon l'une quelconque des revendications 1 à 9, comportant en outre les étapes ci-dessous consistant à :
recevoir (420) un octroi de liaison montante en provenance du noeud de réseau, et si l'octroi de liaison montante indique une ressource affectée pour une seconde taille de bloc de transport différente de la taille de bloc de transport préconfigurée :
assembler (470) un second bloc de transport de la seconde taille de bloc de transport devant être transmis au noeud de réseau ; et
transmettre (480) le second bloc de transport au noeud de réseau.

11. Équipement d'utilisateur (600) pour permettre une affectation de ressources dynamique dans un système de communication sans fil, dans lequel l'équipement d'utilisateur est configuré de manière à communiquer avec un noeud de réseau (650) inclus dans le système de communication sans fil, l'équipement d'utilisateur comportant une unité de traitement (602) configurée de manière à :
- assembler des données de liaison montante, avant de recevoir, en provenance du noeud de réseau, un octroi de liaison montante pour la transmission des données de liaison montante, dans un bloc de transport d'une taille de bloc de transport préconfigurée à transmettre au noeud de réseau.

12. Équipement d'utilisateur selon la revendication 11, lequel comporte en outre :
un récepteur (601) configuré de manière à recevoir la taille de bloc de transport préconfigurée en provenance du noeud de réseau.

13. Équipement d'utilisateur selon l'une quelconque des revendications 11 à 12, lequel comporte en outre :
un émetteur (603) configuré de manière à envoyer une demande concernant une taille de bloc de transport préconfigurée spécifique au noeud de réseau.

14. Équipement d'utilisateur selon l'une quelconque des revendications 11 à 13, dans lequel l'équipement d'utilisateur comporte au moins une mémoire tampon de données d'au moins une porteuse, ladite au moins une mémoire tampon de données étant configurée de manière à inclure des données à transmettre sur ladite au moins une porteuse, l'unité de traitement (602) étant en outre configurée de manière à :
- sélectionner la taille de bloc de transport préconfigurée d'au moins deux tailles de blocs TB préconfigurées sur la base de la taille du contenu de ladite au moins une mémoire tampon de données de ladite au moins une porteuse.

15. Équipement d'utilisateur selon l'une quelconque des revendications 11 à 14, dans lequel l'émetteur (603) est en outre configuré de manière à :
- envoyer une demande de planification au noeud de réseau, la demande de planification comportant une indication d'une demande concernant une affectation de ressources pour la taille de bloc de transport préconfigurée.

16. Équipement d'utilisateur selon l'une quelconque des revendications 11 à 15, dans lequel l'émetteur (603) est en outre configuré de manière à :
- envoyer, conjointement avec une transmission précédente de canal partagé de liaison montante physique PUSCH, au noeud de réseau, une demande d'affectation de ressources, dans lequel la taille de bloc de transport préconfigurée est explicitement indiquée dans la demande.

17. Équipement d'utilisateur selon l'une quelconque des revendications 11 à 16, dans lequel le récepteur (601) est en outre configuré de manière à :
- recevoir un octroi de liaison montante en provenance du noeud de réseau, dans lequel, si l'octroi de liaison montante indique une ressource affectée pour la taille de bloc de transport préconfigurée, l'émetteur (603) est en outre configuré de manière à :
- transmettre le bloc de transport au noeud de réseau.

18. Équipement d'utilisateur selon l'une quelconque des revendications 11 à 17, dans lequel le récepteur (601) est en outre configuré de manière à :
- recevoir un octroi de liaison montante en provenance du noeud de réseau, dans lequel si l'octroi de liaison montante indique une ressource affectée pour une seconde taille de bloc de transport différente de la taille de bloc de transport préconfigurée, l'unité de traitement (602) est en outre configurée de manière à :
- assembler un second bloc de transport, de la seconde taille de bloc de transport, devant être transmis au noeud de réseau ; et
l'émetteur (603) est en outre configuré de manière à :
- transmettre le second bloc de transport au noeud de réseau.
